# EUROPÄISCHE PATENTSCHRIFT

(11) **EP 2 497 940 B1**
(45) Veröffentlichungstag und Bekanntmachung des Hinweises auf die Patenterteilung: **23.01.2019**
(21) Anmeldenummer: 12001625.8
(22) Anmeldetag: 09.03.2012
(51) Int. Cl.: F02N 5/04, F02N 15/02

(54) **Verfahren zum Betrieb eines schienenlosen Landfahrzeugs**
Method for operating a rail-free vehicle
Procédé de fonctionnement d'un véhicule sans rails

(30) Priorität: 10.03.2011 DE 102011013528; 03.08.2011 DE 102011109353
(43) Veröffentlichungstag der Anmeldung: 12.09.2012
(73) Patentinhaber: Volkswagen Aktiengesellschaft, 38440 Wolfsburg (DE)
(72) Erfinder: Schamscha, Axel, 38542 Leiferde (DE); Kalms, Rene, Dr., 38110 Braunschweig (DE); Schwieger, Stephan, 38106 Braunschweig (DE)

(56) Entgegenhaltungen:
- EP-A2- 2 269 882
- WO-A1-02/099301
- DE-A1-102009 053 039

## Beschreibung

### Gebiet der Erfindung

Die Erfindung betrifft ein Verfahren zum Betrieb eines schienenlosen Landfahrzeugs mit einer Verbrennungskraftmaschine sowie einem zur Anwahl unterschiedlicher Übersetzungen ausgelegten Getriebe, das eingangsseitig mittels wenigstens einer Kupplung mit einer Ausgangswelle der Verbrennungskraftmaschine gekoppelt und ausgangsseitig mit den Antriebsrädern des Landfahrzeugs verbunden ist,
wobei in einem Segelbetriebs des Landfahrzeugs, in dem das Landfahrzeug mit ausgeschalteter Verbrennungskraftmaschine und geöffneter Kupplung antriebsfrei rollt, die Verbrennungskraftmaschine durch Schließen der Kupplung angeschleppt wird.

### Stand der Technik

Derartige Verfahren zum Betrieb schienenloser Landfahrzeuge sind bekannt aus der DE 199 45 473 A1. Diese Druckschrift offenbart ein Hybridfahrzeug mit einer Verbrennungskraftmaschine und einer zusätzlichen elektrischen Maschine. Das bekannte Kraftfahrzeug ist insbesondere als Parallelhybrid ausgebildet. Die Kurbelwelle der Verbrennungskraftmaschine ist über eine zentrale Anfahrkupplung mit einer Vorgelegewelle eines Wechselgetriebes gekoppelt. Die Ausgangswelle des Wechselgetriebes ist in üblicher Weise mit dem weiteren Antriebsstrang, d.h. insbesondere den Antriebsrädern gekoppelt. Auch die elektrische Maschine ist mit der Ausgangswelle des Getriebes gekoppelt und zwar wahlweise jeweils über eine Kupplung direkt oder über die Vorgelegewelle. Die genannte Druckschrift offenbart verschiedene Verfahrensvarianten zum Betrieb des Kraftfahrzeugs. Insbesondere wird ein Schleppstart der Verbrennungskraftmaschine aus dem Rekuperationsbetrieb, bei dem die Verbrennungskraftmaschine abgeschaltet und die Anfahrkupplung geöffnet ist, offenbart. Dabei wird von den Antriebsrädern kinetische Energie in die Ausgangswelle des Getriebes und von dort über ein ausgewähltes Gangradpaar in die Vorgelegewelle und auf die Kurbelwelle der Brennkraftmaschine geleitet. Diese wird dadurch entgegen ihrem Schleppmoment allein durch die kinetische Energie des segelnden Kraftfahrzeugs gestartet. Die Weiterfahrt des Kraftfahrzeugs erfolgt dann verbrennungsmotorisch. Die elektrische Maschine kann dabei zur Unterstützung des Anschleppvorgangs der Verbrennungskraftmaschine zugeschaltet werden.

Aus der DE 10 2007 052 737 A1, der DE 10 2007 055 829 A1 und der DE 10 2007 055 831 A1 ist jeweils ein Parallelhybrid-Fahrzeug bekannt, das sich beim Anschleppen seiner Verbrennungskraftmaschine aus dem Segelbetrieb zusätzlich seiner elektrischen Maschine bedient. Diese wird zum eigentlichen Anschleppen der Verbrennungskraftmaschine verwendet und dabei zur komfortabel geregelten Angleichung der Drehzahlen von Kurbelwelle und Getriebeeingang genutzt.

Nachteilig ist, dass diese bekannten Verfahren nur für den Einsatz in Hybridfahrzeugen mit entsprechend ausgelegter elektrischer Maschine geeignet sind. Bei herkömmlichen Fahrzeugen, die als einziges Antriebsaggregat eine Verbrennungskraftmaschine aufweisen, führt ein Anschleppen der Verbrennungskraftmaschine, wie es beispielsweise beim Anschieben von Fahrzeugen mit leerer Batterie im manuellen Betrieb bekannt ist, bei höheren Geschwindigkeiten zu einer extremen Belastung des üblicherweise zwischen der Kurbelwelle und der Kupplung angeordneten Zwei-Massen-Schwungrades.

Üblicherweise wird daher die Verbrennungskraftmaschine auch im Segelbetrieb mittels des elektrischen Anlassers gestartet. Die DE 10 2007 047 091 A1 sowie die DE 103 17 090 A1 offenbaren jeweils spezielle Steuerungen des elektrischen Anlassers. Nachteilig hierbei sind jedoch die hohen Zykluszahlen, denen der elektrische Anlasser bei intensiver Nutzung des Segelbetriebs, beispielsweise bei Verwendung einer Start-Stopp-Automatik, ausgesetzt ist. Zur Bewältigung dieser Belastung muss der Anlasser entsprechend groß und robust ausgestaltet werden, was mit Platz-, Gewichts- und Kostennachteilen verbunden ist.

Aus der WO 02/099301 A1 ist ein Verfahren bekannt, mit dem bei einer während normaler Fahrt auftretenden, leichten Bergabfahrt mittels automatischer Kupplungssteuerung im Takt weniger Sekunden zwischen Motorbremse und ausgekuppeltem Rollen und leerlaufendem Motor abgewechselt und dabei ein gleichmäßiges Tempo beibehalten werden soll.

Aus der EP 2 269 882 A2 ist ein Verfahren zum Kupplungsmanagement in einem Gleitbetrieb eines Kraftfahrzeugs bekannt. Dabei wird das Antriebsmoment durch schlupfenden Kupplungsbetrieb geregelt, während der Motor in etwa bei Leerlaufdrehzahl gehalten wird.

Aus der DE 10 2009 053 039 A1 ist ein Verfahren zur Kompensation von die Leerlaufdrehzahl des Motors absenkenden Störmomenten bekannt, die sich während der Anfahrphase des Fahrzeugs ergeben können.

### Aufgabenstellung

Es ist die Aufgabe der vorliegenden Erfindung ein verbessertes Verfahren zum Anschleppen der Verbrennungskraftmaschine aus dem Segelbetrieb zur Verfügung zu stellen, bei dem insbesondere die Belastung des Zwei-Massen-Schwungrades reduziert wird.

### Darlegung der Erfindung

Diese Aufgabe wird in Verbindung mit den Merkmalen des Oberbegriffs von Anspruch 1 dadurch gelöst, dass die Verbrennungskraftmaschine das einzige Antriebsaggregat des Landfahrzeugs darstellt und dass das Anschleppen wenigstens drei zeitlich nacheinander ablaufende Verfahrensschritte umfasst, nämlich:
- einen ersten Verfahrensschritt, bei dem die Kupplung aus ihrem geöffneten Zustand gesteuert mit einem ersten Momentengradienten wenigstens so weit geschlossen wird, bis ihr Kupplungsmoment das Schleppmoment der Verbrennungskraftmaschine übersteigt,
- einen zweiten Verfahrensschritt, bei dem die Kupplung mit einem zweiten Momentengradienten, der weniger steil als der erste Momentengradient ist, weiter gesteuert wird, wenigstens bis die Drehzahl der Verbrennungskraftmaschine eine Resonanzdrehzahl eines zwischen der Kupplung und der Ausgangswelle der Verbrennungskraftmaschine angeordneten Zwei-Massen-Schwungrades übersteigt, und
- einen dritten Verfahrensschritt, bei dem die Kupplung in geregelter Weise vollständig so geschlossen wird, dass die Drehzahl der Verbrennungskraftmaschine der eingangsseitigen Drehzahl des Getriebes sprungfrei angeglichen wird.

Vorteilhafte Weiterbildungen der Erfindung sind Gegenstand der abhängigen Patentansprüche. Zunächst ist die Erfindung auf "herkömmliche" Landkraftfahrzeuge beschränkt, deren einziges Antriebsaggregat die Verbrennungskraftmaschine ist. In Hybridfahrzeugen, insbesondere bei Parallelhybriden kann ein Anschleppen stets mit Unterstützung durch die elektrische Maschine durchgeführt werden.

Die Erfindung beruht wesentlich auf der Erkenntnis, dass ein wesentlicher Teil der Belastung des Zwei-Massen-Schwungrades von dessen Betrieb im Bereich seiner Resonanzdrehzahlen herrührt. Rotation der Kurbelwelle und des mit dieser verbundenen Zwei-Massen-Schwungrades in dessen Resonanzdrehzahlbereich führt zu erheblichen Schwingungsamplituden, die das Material und die Verbindungen des Zwei-Massen-Schwungrades mechanisch strapazieren und sogar von Insassen des Fahrzeuges als unangenehmes Geräusch und/oder Vibrieren wahrgenommen werden können. Ein einfaches gesteuertes Zufahren der Kupplung, das ein manuelles Anschleppen durch einfaches "Kommenlassen" der Kupplung simulieren würde, kommt daher nicht in Frage. Erfindungsgemäß teilt sich der Vorgang des Anschleppens vielmehr im Wesentlichen in drei Verfahrensschritte.

Der erste Schritt umfasst im Wesentlichen ein vorgesteuertes teilweises Zufahren der Kupplung. Ziel dieses ersten Verfahrensschrittes ist es, dass das Schleppmoment der Brennkraftmaschine überwunden wird, d.h. dass die trägen Massen der Brennkraftmaschine mit vorbestimmten Drehzahlgradienten beschleunigt werden können. Der vorgesteuerte Stellweg der Kupplung kann dabei abhängig von Temperatur, Drehzahl, Abnutzungsrad und/oder ähnlichen Parametern sein. Diese können vor Einleitung des ersten Verfahrensschrittes erfasst und die entsprechende Vorsteuerung berechnet bzw. aus einer hinterlegten Tabelle abgerufen werden. Das resultierende Kupplungsmoment ist vergleichsweise klein, sodass der im ersten Verfahrensabschnitt überwundene Stellweg der Kupplung schnell durchfahren werden kann, ohne dass ein Radmomentensprung, der von den Insassen des Fahrzeugs als Rucken wahrgenommen werden könnte, auftritt. Der Momentengradient des Kupplungsmomentes während des ersten Verfahrensschrittes ist daher recht steil, insbesondere vorzugsweise steiler als die Gradienten im zweiten und dritten Verfahrensschritt.

Ziel des sich an den ersten Verfahrensschritt anschließenden zweiten Verfahrensschrittes ist es, den "kritischen" Drehzahlbereich, d.h. denjenigen Drehzahlbereich, in dem das Zwei-Massen-Schwungrad seine Resonanz zeigt, möglichst zügig und gleichmäßig zu durchfahren. Bevorzugt wird dabei eine Drehzahlregelung eingesetzt, die Drehzahlschwankungen aufgrund der resonanten Schwingungen des Zwei-Massen-Schwungrades ausgleicht. Alternativ kann der kritische Bereich jedoch auch vorgesteuert durchfahren werden, wobei auch hier gemessene Parameter, wie beispielsweise Temperatur, Drehzahl, Abnutzungsgrad der Kupplung oder Ähnliches in die Vorsteuerungs-Berechnung einfließen können. Der Momentengradient des Kupplungsmomentes kann auch während des zweiten Verfahrensschrittes vergleichsweise steil sein, jedoch weniger steil als während des ersten Verfahrensschrittes, da ein als Rucken wahrnehmbares Radmoment vermieden werden muss und sich in diesem Drehzahlbereich Kupplungsmoment und Störmomente durch die Schwingung des Zwei-Massen-Schwungrades überlagern können. Da sich das benötigte Schleppmoment der Brennkraftmaschine nicht nur in der Übergangsphase zwischen einem Stillstand und ihrem Verdrehen, sondern auch während ihres Mitschleppens ändert, muss das Kupplungsmoment entsprechend angepasst werden. Z. B. da die Haftreibungskraft bei gleicher Normalkraft immer größer als die Gleitreibungskraft ist, verringert sich auch der Reibungsanteil des Schleppmoments der Brennkraftmaschine umgehend nach ihrem In-Bewegung-Setzen. Um eventuelle zu schnelle und unkomfortable Beschleunigung der Brennkraftmaschine zu vermindern, kann dann der Momentengradient in manchen Fällen in dem zweiten Verfahrensschnitt auch negativ sein - d.h. das Kupplungsmoment kann in diesem Schritt verringert werden. Aus demselben Grund muss der zweite Verfahrensschnitt auch nicht notwendig umgehend nach dem ersten Verfahrensschnitt erfolgen, sondern das Kupplungsmoment kann zwischen diesen Schritten im Wesentlichen konstant gehalten werden. Die Kupplung wird während dieses Verfahrensschnitts typischerweise weiter geschlossen, wegen der sich ändernden Widerstände und der Reibungskraftänderung während erster Umdrehungen der Brennkraftmaschine kann sie auch in extremen Fällen konstant gehalten oder geöffnet werden. Wegen der bekannten unterschiedlichen Größen der Haftreibungskraft und der Gleitreibungskraft kann sich das Kupplungsmoment trotz der weiter schließenden Kupplung in der Übergangsphase auch verringern.

Ziel des dritten Verfahrensschrittes ist es, die Drehzahlen von Verbrennungskraftmaschine und Getriebeeingang möglichst komfortabel, d.h. momentensprungfrei einander anzugleichen. Hierzu wird eine Drehzahlregelung verwendet. Diese zieht die Drehzahl der Verbrennungskraftmaschine vorzugsweise asymptotisch auf die Drehzahl der Getriebeeingangswelle. Das erfindungsgemäße Verfahren umfasst sowohl die Möglichkeit, die Verbrennungskraftmaschine passiv hochzuziehen und erst bei geschlossener Kupplung zu zünden, als auch die Möglichkeit, die Verbrennungskraftmaschine zu einem früheren Zeitpunkt, z.B. gegen Ende des ersten Verfahrensschrittes, zu zünden und nachfolgende Drehzahlregelungen durch geeignete Motorsteuerung zu unterstützen. Die erstgenannte Variante bietet sich insbesondere dann an, wenn das Anschleppen der Verbrennungskraftmaschine zeitgleich mit einem Abbremsen des Fahrzeugs erfolgen soll. Dann nämlich kann das höhere Bremsmoment der Verbrennungskraftmaschine zur Unterstützung des Bremsvorgangs genutzt werden. Im Gegensatz dazu bietet sich die zweitgenannte Variante insbesondere dann an, wenn das Anschleppen zeitgleich mit einem Beschleunigungsvorgang des Fahrzeugs erfolgen soll. Insbesondere wenn der Momentgradient in dem zweiten Verfahrensschnitt negativ war, muss der dritte Verfahrensschnitt nicht umgehend nach dem zweiten durchgeführt werden, sondern es kann das Kupplungsmoment zwischen dem zweiten und dritten Verfahrensschnitt für eine bestimmte Zeit im Wesentlichen konstant gehalten werden um eine schnelle Änderung des Kupplungsmomenentverlaufs, und dadurch einen unkomfortablen Ruck, zu vermeiden.

Bei einer Weiterbildung der Erfindung ist vorgesehen, dass dem ersten Verfahrensschritt ein Prüfschritt vorausgeht, der je nach Prüferergebnis zu einer Einleitung des ersten Verfahrensschrittes oder zu einem Abbruch des Anschleppens führen kann. Allgemein ist vorgesehen, dass das Anschleppen von einer zentralen Einheit, insbesondere einem Motor-Steuergerät initiiert wird. Diese zentrale Einheit steht in Kommunikation mit peripheren Einheiten, beispielsweise einem Getriebe-Steuergerät und ggf. einem Bremsen-Steuergerät. Diese überprüfen die Sinnhaftigkeit des von der Zentraleinheit angeforderten Anschleppens oder liefern zumindest Mess- und/oder Steuerwerte, die für eine solche Überprüfung erforderlich sind. Ggf. kann ihnen ein "Veto-Recht" eingeräumt werden, wie weiter unten genauer ausgeführt werden soll.

Beispielsweise kann vorgesehen sein, dass der Prüfschritt einen Vergleich der Fahrzeuggeschwindigkeit mit einem vorgegebenen Geschwindigkeitsbereich umfasst, dessen Nichteinhaltung zum Abbruch des Anschleppens führt. Insbesondere ist ein Anschleppen bei besonders niedrigen Geschwindigkeiten, d.h. bei niedriger kinetischer Energie des Fahrzeugs nicht sinnvoll.

Dabei kann vorgesehen sein, dass der vorgegebene Geschwindigkeitsbereich abhängig von der aktuellen Getriebeübersetzung ist. Wenn im Getriebe aktuell eine sehr kleine Übersetzung gewählt, beispielsweise ein großer Gang eingelegt ist, muss die Fahrzeuggeschwindigkeit vergleichsweise hoch sein, damit die Getriebeeingangswelle mit einer Drehzahl oberhalb der Leerlaufdrehzahl der Verbrennungskraftmaschine dreht. Anderenfalls ließe sich ein Einkuppeln ohne Momentensprung nicht realisieren. Umgekehrt darf bei hoher Fahrzeuggeschwindigkeit die Getriebeübersetzung nicht zu groß, beispielsweise ein eingelegter Gang zu klein sein, um ein komfortables Anschleppen zu ermöglichen.

Alternativ kann vorgesehen sein, dass der Prüfschritt einen Vergleich der aktuellen Eingangsdrehzahl des Getriebes mit einem vorgegebenen Drehzahlbereich umfasst, dessen Nicht-Einhaltung zum Abbruch des Anschleppens führt. Die Vorgabe eines Soll-Drehzahlbereichs am Getriebeeingang kann, sofern entsprechende Sensoren vorgesehen sind, die gemeinsame Betrachtung von Fahrzeuggeschwindigkeit und aktueller Übersetzung ersetzen, da aus diesen ebenfalls die relevante Größe "Getriebeeingangsdrehzahl" berechnet werden kann.

Alternativ oder zusätzlich kann vorgesehen sein, dass der Prüfschritt einen Vergleich einer Konstellation sicherheitsrelevanter Parameter eines Bremsen-Steuergerätes mit einem vorgegebenen Konstellationsbereich dieser Parameter umfasst, dessen Nicht-Einhaltung zum Abbruch des Anschleppens führt. Insbesondere sind Bremsen-Steuergeräte moderner Kraftfahrzeuge mit einer komplexen Sensorik gekoppelt, die sie zur Beurteilung der Stabilitätssituation des Fahrzeugs befähigt. In Situationen kritischer Stabilität könnte ein Anschleppen der Verbrennungskraftmaschine, welches nicht ohne Änderung des Radmomentes (wenn auch nur geringfügig) möglich ist, unter Sicherheitsaspekten unerwünscht sein. In solchen Fällen kommt das oben erwähnte "Veto-Recht" des Bremsen-Steuergerätes zum Tragen.

Für den Fall des Abbruchs des Anschleppens stehen unterschiedliche Ausgestaltungsmöglichkeiten zur Verfügung. Gemäß einem ersten Ansatz ist vorgesehen, dass im Fall eines Abbruchs des Anschleppens die Verbrennungskraftmaschine mittels eines elektrischen Anlassers, d.h. in üblicher Weise gestartet wird. Bei einem alternativen Ansatz ist vorgesehen, dass im Fall eines Abbruchs des Anschleppens die aktuelle Getriebeübersetzung verändert und das Anschleppen erneut eingeleitet wird. Insbesondere kann die Getriebeübersetzung so gewählt werden, dass bei der aktuellen Fahrzeuggeschwindigkeit die Getriebeeingangsdrehzahl in einem für die angeschleppte Verbrennungskraftmaschine günstigen Drehzahlbereich liegt. Welcher Drehzahlbereich als günstig anzusehen ist, kann von der aktuellen Fahrsituation abhängen. Beispielsweise kann ein besonders hohes Motormoment oder ein verbrauchsminimierter Motorbetrieb aktuell wünschenswert sein.

Wie bereits zuvor erwähnt, kann das Anschleppen in unterschiedlichen Fahrsituationen eingeleitet werden, beispielsweise wenn der Fahrer des Fahrzeugs einen Abbremswunsch signalisiert oder auch wenn er einen Beschleunigungswunsch signalisiert, jeweils beispielsweise durch Betätigung entsprechender Pedale.

Es ist offensichtlich, dass das erfindungsgemäße Verfahren bevorzugt in Software realisiert wird.

Weitere Merkmale und Vorteile der Erfindung ergeben sich aus der nachfolgenden, speziellen Beschreibung sowie den Zeichnungen.

### Kurze Beschreibung der Zeichnungen

Es zeigen:
- Figur 1:: eine schematische Darstellung eines zur Realisierung des erfindungsgemäßen Verfahrens geeigneten Antriebsstranges eines Kraftfahrzeugs,
- Figur 2:: ein erstes Ausführungsbeispiel einer Kupplungsmomentenkurve zur Erläuterung der Verfahrensschritte des erfindungsgemäßen Verfahrens.
- Figur 3:: ein zweites Ausführungsbeispiel einer Kupplungsmomentenkurve zur Erläuterung der Verfahrensschritte des erfindungsgemäßen Verfahrens

### Detaillierte Beschreibung bevorzugter Ausführungsformen

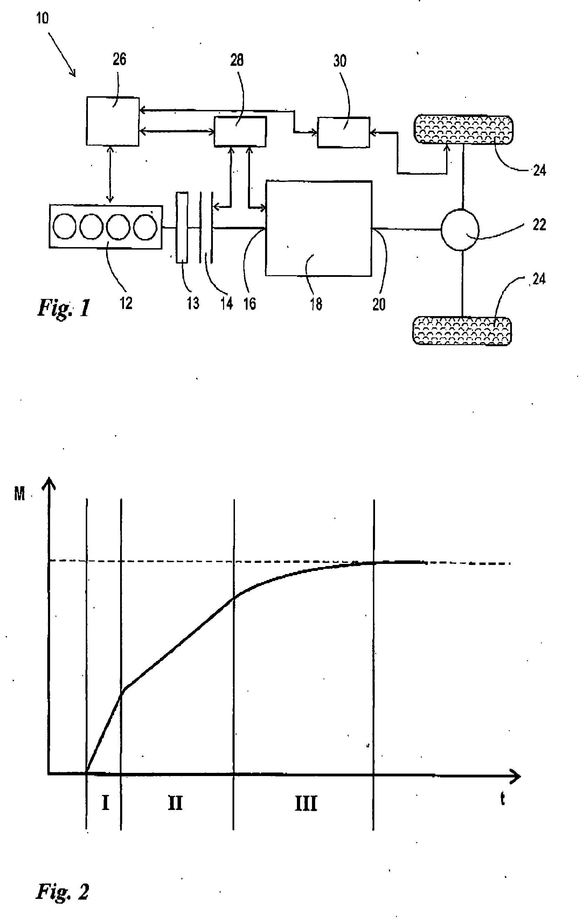

Figur 1 zeigt eine schematische Darstellung des Antriebsstrangs 10 eines Kraftfahrzeugs, der grundsätzlich zur Durchführung des erfindungsgemäßen Verfahrens einsetzbar ist. Der Antriebsstrang 10 umfasst eine Verbrennungskraftmaschine 12, die über ein Zwei-Massen-Schwungrad 13 und eine Kupplung 14 mit dem Eingang 16 eines Getriebes 18 gekoppelt ist. In Figur 1 ist eine einfache Kupplung 14 gezeigt. Gleichwohl ist die Erfindung auch auf Doppelkupplungsgetriebe anzuwenden, wobei eine oder beide Kupplungen des Doppelkupplungsgetriebes einzeln oder gemeinsam gemäß dem erfindungsgemäßen Verfahren angesteuert werden können. Der Ausgang 20 des Getriebes 18 ist über ein Differential 22 mit den Antriebsrädern 24 des Kraftfahrzeugs verbunden. Weiter ist ein elektronisches Motorsteuergerät 26 vorgesehen, welches Parameter der Verbrennungskraftmaschine 12 erfasst und steuert. Insbesondere ist das Motor-Steuergerät 26 zur Koordinierung und insbesondere Initiierung des erfindungsgemäßen Anschleppens der Verbrennungskraftmaschine 12 programmiert. Das Motor-Steuergerät 26 steht mit einem Getriebe-Steuergerät 28 sowie einem Bremsen-Steuergerät 30 in informationsaustauschender Verbindung. Insbesondere können über die als Doppelpfeile dargestellten Kommunikationsverbindungen Mess- und Steuerwerte übertragen werden. Das Getriebesteuergerät 28 misst und steuert Parameter des Getriebes 18. Zudem kann das Getriebe-Steuergerät 28 auch Parameter der Kupplung 14 messen und steuern. Das Bremsen-Steuergerät 30 steht mit nicht näher dargestellten Bremsvorrichtungen in Kommunikationsverbindung, die auch eine umfangreiche Sensorik in Bezug auf den Zustand der Antriebsräder 24, insbesondere deren Drehgeschwindigkeit, Schlupf etc. erfassen.

Figur 2 zeigt das Kupplungsmoment der Kupplung 14 während eines Ablaufs eines ersten Ausführungsbeispiels des erfindungsgemäßen Verfahrens als Funktion der Zeit. Während eines ersten Verfahrensschrittes I wird die Kupplung gem. einem vorgegebenen Gradienten gesteuert teilweise zugefahren. Gradient und Stellweg können dabei von zuvor gemessenen Parametern, wie beispielswiese Temperatur, Drehzahl etc. abhängen. Der während des Verfahrensschrittes I zu durchfahrende Stellweg ist so berechnet, dass am Ende dieses Verfahrensschrittes das Schleppmoment der Verbrennungskraftmaschine 12 überwunden ist und deren träge Massen mit gleichbleibenden Gradienten beschleunigt werden können. Während des Verfahrensschrittes II wird die Kupplung 14 weiter geschlossen und die Drehzahl der Verbrennungskraftmaschine 12 über einen Bereich hinaus beschleunigt, in dem die Resonanzdrehzahl des Zwei-Massen-Schwungrades 13 liegt. Dieser Verfahrensschritt kann entweder gesteuert durchfahren werden, wenn die Resonanzdrehzahl des Zwei-Massen-Schwungrades 13, ggf. in ihrer Abhängigkeit von Parametern wie Temperatur etc. bekannt ist. Andererseits ist es auch möglich, den Verfahrensschritt II geregelt zu durchlaufen, wobei ein Regelkreis bevorzugt die Resonanz des Zwei-Massen-Schwungrades 13 erkennt und resultierende Störungen kompensiert. Im letzten Verfahrensschritt III wird dann die Kupplung vollständig geschlossen, wobei in einem geregelten Verfahren die Drehzahlen der Verbrennungskraftmaschine 12 und des Getriebeeingangs 16 möglichst ruckfrei, d.h. bevorzugt asymptotisch aneinander angeglichen werden.

Die Koordination des gesamten Verfahrens übernimmt vorzugsweise das Motor-Steuergerät 26, wobei das Getriebe-Steuergerät 28 und ggf. das Bremsen-Steuergerät 30 entscheidungsrelevante Parameter und Messwerte liefern oder, insbesondere im Fall des die Stabilität des Fahrzeugs überwachenden Bremsen-Steuergerätes 30 selbständig einen Abbruch des Anschleppens verursachen können.

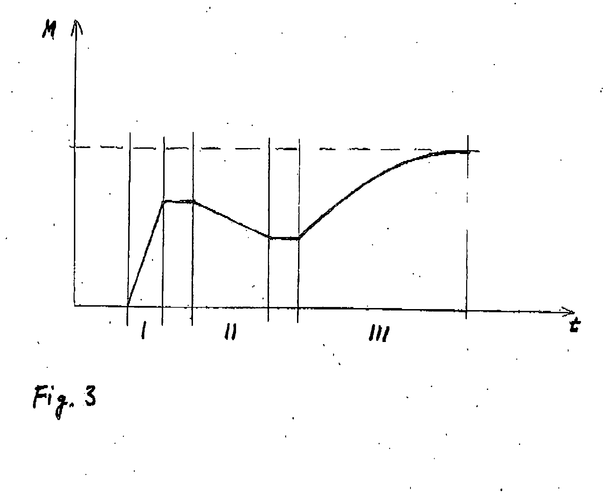

Figur 3 zeigt das Kupplungsmoment der Kupplung 14 während eines Ablaufs eines zweiten Ausführungsbeispiels des erfindungsgemäßen Verfahrens als Funktion der Zeit. Während des zweiten Verfahrensschrittes, wird die Brennkraftmaschine schon gedreht, d.h. ihr Reibungsmoment ist geringer als im Stillstand, und deswegen ist das Schleppmoment kleiner als am Ende des ersten Verfahrensschrittes. Um eine zu schnelle Erhöhung der Drehzahl bzw. der Winkelgeschwindigkeit der Brennmaschine zu vermeiden, wird das Kupplungsmoment in diesem Verfahrensschnitt verringert d.h. der Momentgradient ist negativ.
Im Gegensatz zu dem ersten Ausführungsbeispiel folgen hier die Verfahrensschritte nicht umgehend nacheinander, sondern es sind zwischen ihnen Abschnitte eingelegt, wo das Kupplungsmoment für eine bestimmte Zeit konstant gehalten wird. Somit wird eine schnelle Änderung des Momentgradienten und ein daraus resultierender unkomfortabler Ruck vermeiden. Ein solcher Abschnitte bzw. beide können selbstverständlich auch beim Verfahren mit einem positivem Momentgradienten eingelegt werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere hat er die spezielle Wahl von Parametern wie Stellweg, Gradienten, Drehzahlen etc. den Anforderungen des konkreten Einzelfalls anzupassen.

### Bezugszeichenliste

- 10: Antriebsstrang
- 12: Verbrennungskraftmaschine
- 13: Zwei-Massen-Schwungrad
- 14: Kupplung
- 16: Getriebeeingang
- 18: Getriebe
- 20: Getriebeausgang
- 22: Differential
- 24: Antriebsräder
- 26: Motor-Steuergerät
- 28: Getriebe-Steuergerät
- 30: Bremsen-Steuergerät

## Patentansprüche

1. Verfahren zum Betrieb eines schienenlosen Landfahrzeugs mit einer Verbrennungskraftmaschine (12) sowie einem zur Anwahl unterschiedlicher Übersetzungen ausgelegten Getriebe (18), das eingangsseitig mittels wenigstens einer Kupplung (14) mit einer Ausgangswelle der Verbrennungskraftmaschine (12) gekoppelt und ausgangsseitig mit den Antriebsrädern (24) des Landfahrzeugs verbunden ist, wobei in einem Segelbetriebs des Landfahrzeugs, in dem das Landfahrzeug mit ausgeschalteter Verbrennungskraftmaschine (12) und geöffneter Kupplung (14) antriebsfrei rollt, die Verbrennungskraftmaschine (12) durch Schließen der Kupplung (14) angeschleppt wird,
**dadurch gekennzeichnet,**
**dass** die Verbrennungskraftmaschine (12) das einzige Antriebsaggregat des Landfahrzeugs darstellt und dass das Anschleppen wenigstens drei zeitlich nacheinander ablaufende Verfahrensschritte umfasst, nämlich:
- einen ersten Verfahrensschritt, bei dem die Kupplung (14) aus ihrem geöffneten Zustand gesteuert mit einem ersten Momentengradienten wenigstens so weit geschlossen wird, bis ihr Kupplungsmoment das Schleppmoment der Verbrennungskraftmaschine (12) übersteigt,
- einen zweiten Verfahrensschritt, bei dem die Kupplung (14) mit einem zweiten Momentengradienten, der weniger steil als der erste Momentengradient ist, weiter gesteuert wird, wenigstens bis die Drehzahl der Brennkraftmaschine eine Resonanzdrehzahl eines zwischen der Kupplung und der Ausgangswelle der Verbrennungskraftmaschine (12) angeordneten Zwei-Massen-Schwungrades übersteigt, und
- einen dritten Verfahrensschritt, bei dem die Kupplung (14) in geregelter Weise vollständig so geschlossen wird, dass die Drehzahl der Verbrennungskraftmaschine (12) der eingangsseitigen Drehzahl des Getriebes (18) sprungfrei angeglichen wird.

2. Verfahren nach Anspruch 1,
**dadurch gekennzeichnet,**
**dass** in dem zweiten Verfahrensschritt die Kupplung weiter geschlossen wird.

3. Verfahren nach einem der Ansprüche 1 oder 2,
**dadurch gekennzeichnet,**
**dass** der Momentgradient in dem zweiten Verfahrensschnitt negativ oder null ist.

4. Verfahren nach einem der vorangehenden Ansprüche,
**dadurch gekennzeichnet,**
**dass** das Kupplungsmoment zwischen dem ersten und dem zweiten Verfahrensschritt im Wesentlichen konstant gehalten wird.

5. Verfahren nach einem der vorangehenden Ansprüche,
**dadurch gekennzeichnet,**
**dass** das Kupplungsmoment zwischen dem zweiten und dem dritten Verfahrensschritt im Wesentlichen konstant gehalten wird.

6. Verfahren nach einem der Ansprüche 1 bis 3,
**dadurch gekennzeichnet,**
**dass** das die drei Verfahrensschnitte umgehend nacheinander folgen.

7. Verfahren nach einem der vorangehenden Ansprüche,
**dadurch gekennzeichnet,**
**dass** dem ersten Verfahrensschritt ein Prüfschritt vorausgeht, der je nach Prüfergebnis zu einer Einleitung des ersten Verfahrensschrittes oder zu einem Abbruch des Anschleppens führt.

8. Verfahren nach Anspruch 7,
**dadurch gekennzeichnet,**
**dass** der Prüfschritt einen Vergleich der Fahrzeuggeschwindigkeit mit einem vorgegebenen Geschwindigkeitsbereich umfasst, dessen Nicht-Einhaltung zum Abbruch des Anschleppens führt.

9. Verfahren nach Anspruch 8,
**dadurch gekennzeichnet,**
**dass** der vorgegebene Geschwindigkeitsbereich abhängig von der aktuellen Getriebeübersetzung ist.

10. Verfahren nach Anspruch 7,
**dadurch gekennzeichnet,**
**dass** der Prüfschritt einen Vergleich der aktuellen eingangsseitigen Drehzahl des Getriebes (18) mit einem vorgegebenen Drehzahlbereich umfasst, dessen Nicht-Einhaltung zum Abbruch des Anschleppens führt.

11. Verfahren nach einem der Ansprüche 7 bis 10,
**dadurch gekennzeichnet,**
**dass** der Prüfschritt einen Vergleich einer Konstellation sicherheitsrelevanter Parameter eines Bremsen-Steuergerätes (36) mit einem vorgegebenen Konstellationsbereich dieser Parameter umfasst, dessen Nicht-Einhaltung zum Abbruch des Anschleppens führt.

12. Verfahren nach einem der Ansprüche 7 bis 11,
**dadurch gekennzeichnet,**
**dass** im Fall eines Abbruchs des Anschleppens die Verbrennungskraftmaschine (12) mittels eines elektrischen Anlassers gestartet wird.

13. Verfahren nach einem der Ansprüche 7 bis 10,
**dadurch gekennzeichnet,**
**dass** im Fall eines Abbruchs des Anschleppens die aktuelle Getriebeübersetzung verändert und das Anschleppen erneut eingeleitet wird.

14. Verfahren nach einem der vorangehenden Ansprüche,
**dadurch gekennzeichnet,**
**dass** das Anschleppen eingeleitet wird, wenn ein Fahrer des Landfahrzeugs einen Abbremswunsch signalisiert.

15. Verfahren nach einem der vorangehenden Ansprüche,
**dadurch gekennzeichnet,**
**dass** das Anschleppen eingeleitet wird, wenn ein Fahrer des Landfahrzeugs einen Beschleunigungswunsch signalisiert.

## Claims

1. Method for operating a rail-free land vehicle having an internal combustion engine (12) and a transmission (18) which is configured to select different transmission ratios and is coupled on the input side to an output shaft of the internal combustion engine (12) by means of at least one clutch (14) and is connected on the output side to the drive wheels (24) of the land vehicle, wherein in a sailing mode of the land vehicle, in which the land vehicle rolls in a drive-free fashion with the internal combustion engine (12) switched off and the clutch (14) opened, the internal combustion engine (12) is tow-started by closing the clutch (14),
**characterized**
**in that** the internal combustion engine (12) constitutes the only drive assembly of the land vehicle, and in that the tow-starting comprises at least three method steps which occur in chronological succession, specifically:
- a first method step in which the clutch (14) is closed from its opened state, in a controlled fashion, with a first torque gradient at least until its clutch torque exceeds the drag torque of the internal combustion engine (12),
- a second method step in which the clutch (14) is controlled further with a second torque gradient which is less steep than the first torque gradient, at least until the rotational speed of the internal combustion engine exceeds a resonance rotational speed of a two-mass flywheel which two-mass flywheel is arranged between the clutch and the output shaft of the internal combustion engine (12), and
- a third method step in which the clutch (14) is closed completely in a closed-loop controlled fashion in such a way that the rotational speed of the internal combustion engine (12) is approximated without discontinuity to the input-side rotational speed of the transmission (18) .

2. Method according to Claim 1,
**characterized**
**in that** in the second method step the clutch is closed further.

3. Method according to one of Claims 1 and 2,
**characterized**
**in that** the torque gradient in the second method step is negative or zero.

4. Method according to one of the preceding claims,
**characterized**
**in that** the clutch torque is kept essentially constant between the first and the second method step.

5. Method according to one of the preceding claims,
**characterized**
**in that** the clutch torque is kept essentially constant between the second and the third method step.

6. Method according to one of Claims 1 to 3,
**characterized**
**in that** the three method steps follow one another in direct succession.

7. Method according to one of the preceding claims,
**characterized**
**in that** the first method step is preceded by a checking step which, depending on the result of the checking process, gives rise to initiation of the first method step or to aborting of the tow-start.

8. Method according to Claim 7,
**characterized**
**in that** the checking step comprises a comparison of the vehicle speed with a predefined speed range, non-compliance with which leads to aborting of the tow-start.

9. Method according to Claim 8,
**characterized**
**in that** the predefined speed range is dependent on the current transmission ratio.

10. Method according to Claim 7,
**characterized**
**in that** the checking step comprises a comparison of the current input-side rotational speed of the transmission (18) with a predefined rotational speed range, non-compliance with which leads to aborting of the tow-start.

11. Method according to one of Claims 7 to 10,
**characterized**
**in that** the checking step comprises a comparison of a configuration of safety-relevant parameters of a brake control unit (36) with a predefined configuration range of these parameters, non-compliance with which leads to aborting of the tow-start.

12. Method according to one of Claims 7 to 11,
**characterized**
**in that** in the event of aborting of the tow-start, the internal combustion engine (12) is started by means of an electric starter.

13. Method according to one of Claims 7 to 10,
**characterized**
**in that** in the event of aborting of the tow-start, the current transmission ratio is changed and the tow-start is initiated again.

14. Method according to one of the preceding claims,
**characterized**
**in that** the tow-start is initiated if a driver of the land vehicle signals a braking request.

15. Method according to one of the preceding claims,
**characterized**
**in that** the tow-start is initiated if a driver of the land vehicle signals an acceleration request.

## Revendications

1. Procédé de fonctionnement d'un véhicule terrestre non ferroviaire, comprenant un moteur à combustion interne (12) ainsi qu'une boîte de vitesses (18) conçue pour la sélection de différents rapports, qui est accouplée du côté de l'entrée au moyen d'au moins un embrayage (14) à un arbre de sortie du moteur à combustion interne (12) et qui est connectée du côté de la sortie aux roues motrices (24) du véhicule terrestre, dans lequel, dans un mode de roue libre du véhicule terrestre dans lequel le véhicule terrestre roule sans entraînement avec le moteur à combustion interne (12) arrêté et l'embrayage (14) ouvert, le moteur à combustion interne (12) est réentraîné par fermeture de l'embrayage (14),
**caractérisé en ce que**
le moteur à combustion interne (12) constitue le seul groupe motopropulseur du véhicule terrestre et **en ce que** le réentraînement comprend au moins trois étapes de procédé se déroulant les unes après les autres, à savoir :
- une première étape de procédé dans laquelle l'embrayage (14), commandé hors de son état ouvert, est fermé avec un premier gradient de couple au moins jusqu'à ce que son couple d'embrayage dépasse le couple d'entraînement du moteur à combustion interne (12),
- une deuxième étape de procédé dans laquelle l'embrayage (14) continue d'être commandé avec un deuxième gradient de couple qui est moins raide que le premier gradient de couple, au moins jusqu'à ce que le régime du moteur à combustion interne dépasse un régime de résonance d'un volant d'inertie à deux masses disposé entre l'embrayage et l'arbre de sortie du moteur à combustion interne (12), et
- une troisième étape de procédé dans laquelle l'embrayage (14) est complètement fermé de manière régulée de telle sorte que le régime du moteur à combustion interne (12) corresponde, sans saut, au régime du côté de l'entrée de la boîte de vitesses (18).

2. Procédé selon la revendication 1,
**caractérisé en ce que**
dans la deuxième étape de procédé, l'embrayage est à nouveau refermé.

3. Procédé selon l'une quelconque des revendications 1 ou 2,
**caractérisé en ce que**
le gradient de couple dans la deuxième étape de procédé est négatif ou nul.

4. Procédé selon l'une quelconque des revendications précédentes,
**caractérisé en ce que**
le couple d'embrayage entre la première et la deuxième étape de procédé est maintenu essentiellement constant.

5. Procédé selon l'une quelconque des revendications précédentes,
**caractérisé en ce que**
le couple d'embrayage entre la deuxième et la troisième étape de procédé est maintenu essentiellement constant.

6. Procédé selon l'une quelconque des revendications 1 à 3,
**caractérisé en ce que** les trois étapes de procédé sont effectuées immédiatement les unes après les autres.

7. Procédé selon quelconque des revendications précédentes,
**caractérisé en ce**
**qu'**une étape de contrôle précède la première étape de procédé, laquelle, en fonction du résultat du contrôle, conduit au lancement de la première étape de procédé ou à une interruption du réentraînement.

8. Procédé selon la revendication 7,
**caractérisé en ce que**
l'étape de contrôle comprend une comparaison de la vitesse du véhicule avec une plage de vitesses prédéfinie dont le non-respect conduit à l'interruption du réentraînement.

9. Procédé selon la revendication 8,
**caractérisé en ce que**
la plage de vitesses prédéfinie dépend du rapport de vitesse actuel.

10. Procédé selon la revendication 7,
**caractérisé en ce que**
l'étape de contrôle comprend une comparaison du régime actuel du côté de l'entrée de la boîte de vitesses (18) avec une plage de régime prédéfinie dont le non-respect conduit à l'interruption du réentraînement.

11. Procédé selon l'une quelconque des revendications 7 à 10,
**caractérisé en ce que**
l'étape de contrôle comprend une comparaison d'une constellation de paramètres de sécurité dans l'appareil de commande de frein (36) avec une plage de constellation prédéfinie de ces paramètres, dont le non-respect conduit à l'interruption du réentraînement.

12. Procédé selon l'une quelconque des revendications 7 à 11,
**caractérisé en ce que**
dans le cas d'une interruption du réentraînement, le moteur à combustion interne (12) est démarré au moyen d'un démarreur électrique.

13. Procédé selon l'une quelconque des revendications 7 à 10,
**caractérisé en ce que**
dans le cas d'une interruption du réentraînement, le rapport de vitesse actuelle est modifié et le réentraînement est à nouveau lancé.

14. Procédé selon l'une quelconque des revendications précédentes,
**caractérisé en ce que**
le réentraînement est lancé lorsqu'un conducteur du véhicule terrestre signale une intention de freinage.

15. Procédé selon l'une quelconque des revendications précédentes,
**caractérisé en ce que** le réentraînement est lancé lorsqu'un conducteur du véhicule terrestre signale une intention d'accélération.
